# EUROPEAN PATENT APPLICATION

(11) **EP 4 404 601 A1**
(43) Date of publication of application: **24.07.2024**
(21) Application number: 23214281.0
(22) Date of filing: 05.12.2023
(51) Int. Cl.: H04W 4/80, H04W 4/20, H04W 12/50, B64D 11/00, H04W 4/48, H04W 4/42

(54) **NFC-BASED SEMI-AUTOMATIC METHOD FOR CONNECTING PERSONAL ELECTRONIC DEVICES TO A WI-FI NETWORK AND PERFORM CABIN CONTROL FUNCTIONS ON AN AIRCRAFT**

(30) Priority: 17.01.2023 US 202318098048
(71) Applicant: Embraer S.A., 12227-901 São José Dos Campos SP (BR)
(72) Inventor: DE BASTOS LAVRADOR, Marcelo, 12.227-901 São José dos Campos - SP (BR); CURTIS, Christopher, 12.227-901 São José dos Campos - SP (BR)
(74) Representative: Liesegang, Eva

(57) **Abstract**

Near Field Communication (NFC) technology is applied to connect Personal Electronic Devices (PEDs) to a Wi-Fi network of a vehicle such as a business jet without the need for users to follow conventional steps to establish such a connection. Once a Wi-Fi connection is established, the same approach is also used to automatically open any web application to remotely control functions without having to manually open a web browser and enter the application's URL.

## Description

### CROSS-REFERENCE TO RELATED APPLICATIONS

None

### TECHNICAL FIELD

This technology relates to application of Near Field Communication (NFC) technology to connect Personal Electronic Devices (PEDs) to a Wi-Fi network without the need for users to follow conventional steps to establish such a connection. Once a Wi-Fi connection is established, the same approach is also used to automatically open any web or other application to remotely control functions without having e.g., to manually open a web browser and enter the application's URL.

### BACKGROUND

Personal Electronic Devices (PEDs) can be used to remotely control a variety of functions in many different fields of application such as, for example, inside the cabin of transportation vehicles. One particular example is the cabin of an executive jet where lighting, temperature, inflight entertainment, audio, internet, among other functions, are controlled through a Cabin Management System (CMS).

Today, it is essential for private jet passengers to connect their PEDs to the cabin's Wi-Fi network and control cabin functions through their phones or tablets. However, just as when connecting to a home's wi-fi network, the process typically requires user action to find the network's SSID, know and enter its password, and wait for the connection to be established.

Another common action for passengers in today's private jets is to use web applications to control cabin functions. This requires a process that also needs user action: opening a web application through a web browser and entering the URL of the application.

Such manual processes may cause inconvenience since it takes a long time and the necessary information such as passwords may not be readily available, negatively impacting passenger experience.

### SUMMARY

The technology herein provides a method for automating these processes.

### BRIEF DESCRIPTION OF DRAWINGS

Figure 1 shows an example executive jet aircraft.
Figure 2 shows an example cabin interior of the Figure 1 jet aircraft.
Figure 3 is a block diagram of an example cabin management system of the Figure 1 jet aircraft.
Figures 4A, 4B show an example smart device app or web based graphical user interface to enable a passenger to interact with the Figure 3 cabin management system.
Figures 5A, 5B, 5C, 5D are together a flip chart animation of an example process for connecting the smart device to control and/or monitor the Figure 3 cabin management system.
Figure 6 is a schematic block diagram of a smart device.
Figure 7 is a flowchart of example steps the smart device performs.
Figure 8 is a schematic circuit diagram of a passive NFC tag.

### DETAILED DESCRIPTION

The present technology provides application of Near Field Communication (NFC) technology to connect PEDs to an executive jet's cabin Wi-Fi or other wireless network without the need for users to follow conventional steps to establish such a connection. Once a Wi-Fi connection is established, the same approach can also be used to automatically open any web or other application to control cabin devices without having to manually open a web browser and enter the application's URL.

While NFC may already be used to connect to Wi-Fi networks and/or to run scripts that allow applications to be opened and/or configured, this use has not been found for the benefit of private jet passengers attempting to connect to cabin management systems. Simplifying user actions on interfaces has marketing appeal and generates added value to the product.

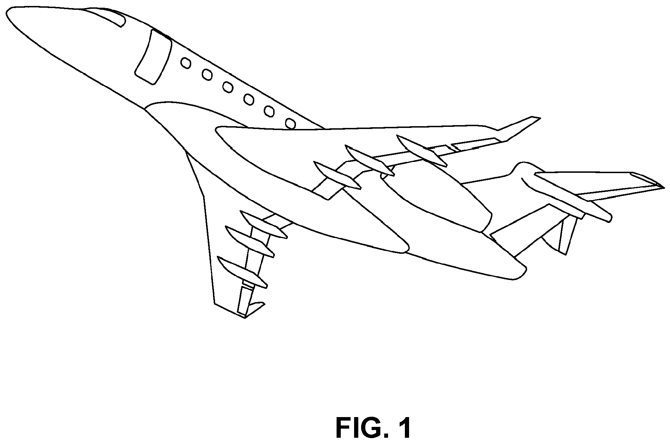

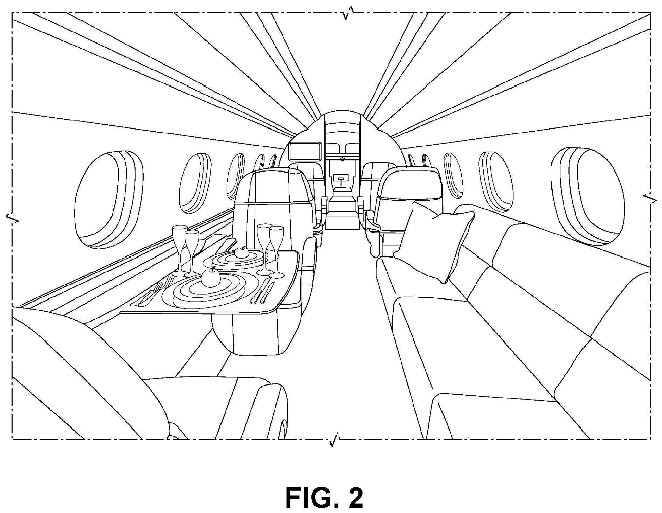

Figure 1 shows an image of an example executive jet, and Figure 2 shows an example passenger cabin of such a jet. Although a pilot flies the aircraft and controls many aspects of its operation, the passengers themselves are enabled to control the environment within the passenger cabin. This offloads non-critical tasks from the pilot and gives passengers more convenient ways to control their cabin environment.

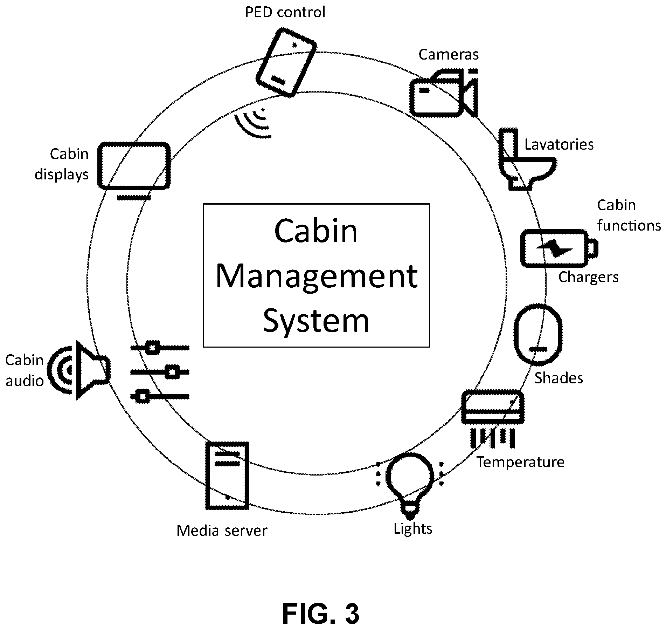

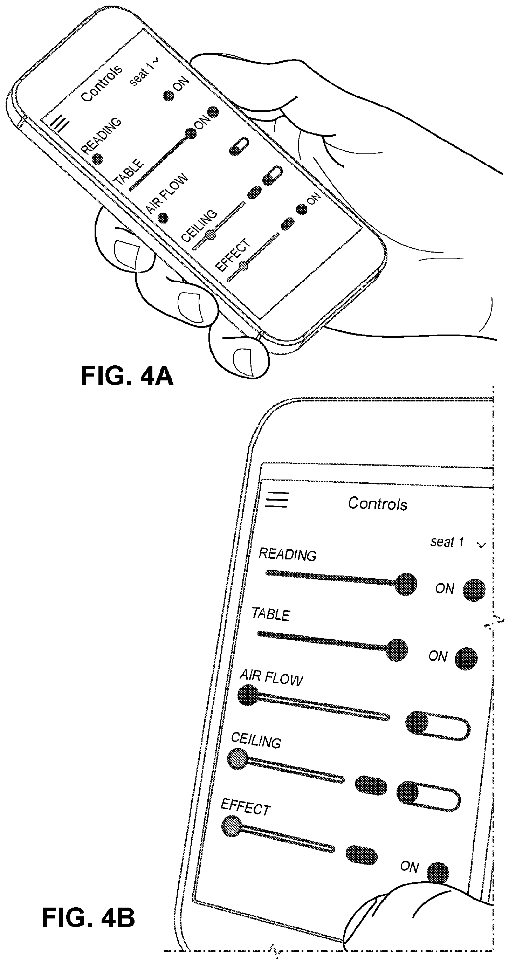

Figure 3 shows an example cabin management system of the Figure 1 executive jet. The cabin management system includes for example cabin displays, cabin audio, a media server, cabin lights, cabin temperature, cabin window shades, cabin battery chargers, cabin lavatories, cabin cameras, and PED control. In prior designs, the cabin might contain one or more dedicated input and display devices used to provide one or more graphical user interfaces for controlling these various cabin control functions. Now however, it is desirable to provide such control using a smart device such as shown in Figures 4A, 4B. For example, the Figure 4A, 4B smart device user interface screen provides control over reading and table lights, airflow, ceiling lights and effect. Some such user interface controls may be on-off while others are variable (e.g., brightness controls for the table, ceiling and other effects). Such controls are very convenient since a passenger does not need to get out of their seat to operate the controls, and different passengers can control different parts of the cabin management system (for example, the passenger seated in seat 1 may control the reading light, table light and airflow of seat 1, the passenger seated in seat 2 may control the reading light, table light and airflow of seat 2, and so on).

Conventional cabin management systems may also provide Wi-Fi connectivity for smart devices, including providing connections or tunnels via an on-board Wi-Fi network to enable smart devices to communicate with the cabin management system.

Under the conventional IEEE 802.11ac or other similar protocol, a Wi-Fi access point (AP) on board the aircraft advertises an "SSID" that identifies the Wi-Fi network. The AP is available for connecting wireless devices with other wireless devices and/or wired devices over the network. A device wishing to connect with the network scans in search of networks to join. The device sends a probe request frame advertising the data rates it supports and its 802.11 capabilities. An AP replies with probe response frames containing the network BSSID which may encode or correspond to the AP's MAC address. The AP uses a further "handshake" message exchange to authenticate the device, register the device's MAC address with the AP, assign an IP address to the device on the network, and provide an encryption key exchange for encrypted communication. Once a connection is established, the device may wirelessly communicate via the AP with another device(s) assigned an IP address on the network, including nodes of the cabin management system.

### Use of NFC to Help Establish a WiFi Connection

Near Field Communication, as the name implies, enables short-range communication between compatible devices. Such technology has become pervasive in point of sale payment systems, where consumers "tap" a payment transaction device with their payment card or smart device.

NFC requires at least one transmitting device, and another to receive the signal. A range of devices can use the NFC standard (e.g., ISO/IEC 14443 and NFC Forum Technical Specifications) and will be considered either passive or active.

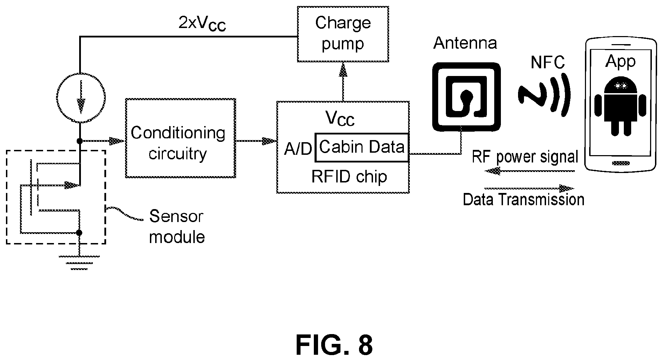

Passive NFC devices include tags, and other small transmitters, that can send information to other NFC devices without the need for a power source of their own. Such passive devices are often referred to as "transponders" because they receive a wireless query transmission from another device and use power of the received transmission to transmit a wireless reply to the query transmission. An example is an NFC-equipped payment card. An example schematic diagram of a passive NFC tag shown in Figure 8 includes an antenna, an RFID transponder chip storing data to send, a charge pump, conditioning circuitry and a sensor module.

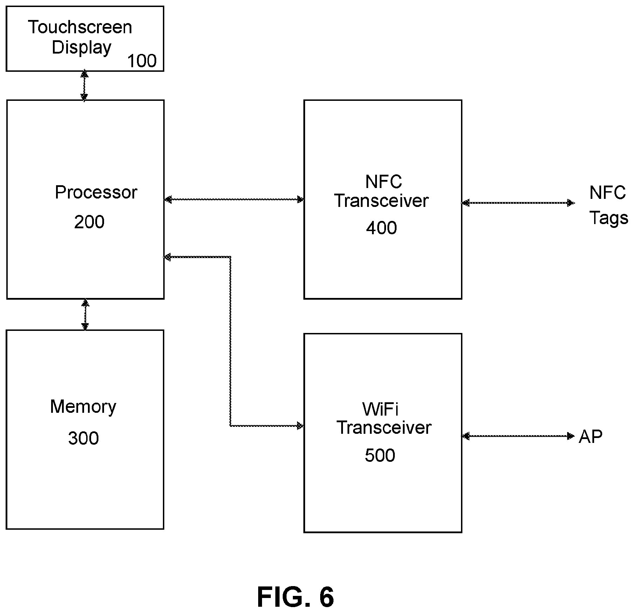

Active NFC devices can originate communiques to both send and receive data, and can communicate with each other as well as with passive devices. Smartphones are by far the most common form of active NFC device, especially considering that nowadays most of them are already equipped with this feature. See the Figure 6 schematic diagram of an example smart phone, item 400. Point of sale payment devices are another example of an active NFC device.

In example embodiments, the passive NFC device comprises a readable/writable tag, in the form of a small adhesive sticker, capable of storing text with login data (e.g., SSID and password of a WiFi network) and a script for connection with the aircraft's passenger cabin Wi-Fi network (see "cabin data" block of Figure 8). In some embodiments, a second NFC tag with the same circuit diagram and structure can be used to store different or additional cabin data, e.g., a script to open a web browser and execute a specific URL for the web application that controls the cabin devices. NFC tags can be further protected against overwriting by adding protection parameters, which precludes the injection of malicious scripts that could lead to security hazards.

In example embodiments, the active NFCs comprise the passenger PEDs such as shown in Figure 6, which automatically read the information and execute those scripts as they sequentially approach these tags.

### Example

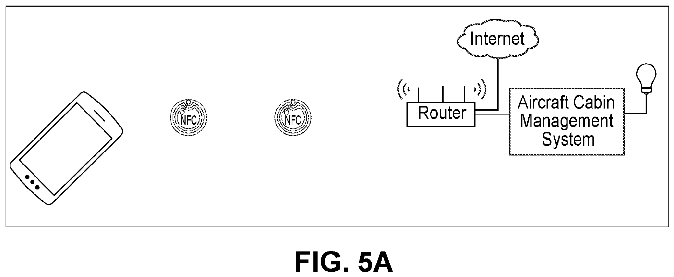

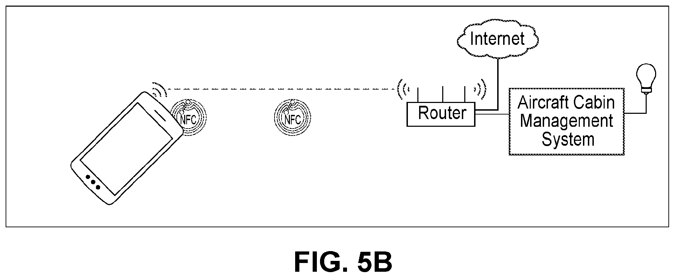

Figures 5A-5D show an example in the form of a flip chart animation (to view the animation, press the "PAGE DOWN" key of a device used to view this patent disclosure).

Figure 5A shows an example smart device of a passenger that wishes to connect to an AP (here designated "Router") on board the Figure 1 executive jet. There can be several purposes to establishing such a connection (e.g., to access the Internet via a satellite internet connection) but one purpose is to provide wireless connectivity to the aircraft cabin management system so the passenger's smart device can access status information concerning the cabin management system and provide control inputs to control the cabin management system.

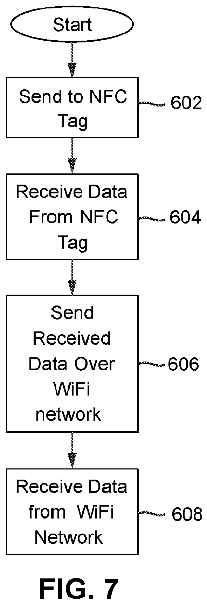

Paging down to Figure 5A, the passenger brings the smart device in proximity to a first passive NFC transponder such as a thin sticker pasted to a portion of the cabin for example near the passenger's seat. Such proximity causes the active NFC device within the smart device to detect the presence of the passive NFC transponder (in some cases, the passenger may first need to enable an NFC Tag Reader icon on their smart device to turn on the NFC function of the smart device). In particular, the active NFC device within the smart device may periodically query for nearby passive NFC transponders by sending query transmissions (Figure 7, block 602). If the first NFC tag is in proximity to the smart device, the first NFC tag will send back the "cabin data", which in one embodiment may comprise information such as SSID, password and a script (or pointer to a script) the smart device can use to establish a WiFi connection with the AP. The NFC device of the smart device receives this information provided by the NFC tag (Figure 7 block 604) and stores it in local memory. A processor of the smart device then writes this received information to an 802.11 communications adapter or chip within the smart device to prompt the communications adapter to transmit the information over the WiFi network (Figure 7 block 606) to attempt to establish a WiFi connection with the AP. In response, the AP will send information such as an IP address over the WiFi network back to the smart device (Figure 7, block 608) to enable the smart device to communicate over the WiFi network.

Such functionality eliminates the need for the passenger to manually input the information or to remember the information. Furthermore, the logon script the smart device receives from the NFC tag may automatically control the smart device to establish a connection with the AP so the passenger does not need to fumble with smart device "network connections" interface.

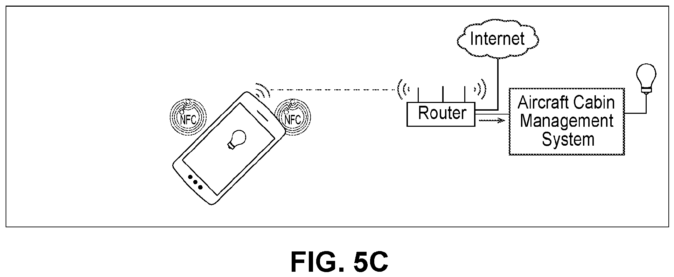

As Figure 5C shows, once the smart device has established a connection with the AP, the passenger may move the smart device out of proximity from the first NFC tag and into proximity with a second NFC tag. This second passive NFC tag is queried in the same way as the first passive NFC tag as shown in Figure 7, but provides different information. In one embodiment, the information the second NFC tag provides to the smart device causes the smart device to automatically display the cabin management system input and display screen shown in Figures 4A, 4B. The smart device may obtain such input and display screen from the cabin management system itself (acting as a web server to serve the screen in response to a URL the second NFC tag provides to the smart device)over the now-established WiFi connection); or the smart device may already store such input and display screen (e.g., as part of an application previously stored on the smart device) and access such stored app or screen provided by the app in response to a pointer and/or access command the second NFC tag provides to the smart device.

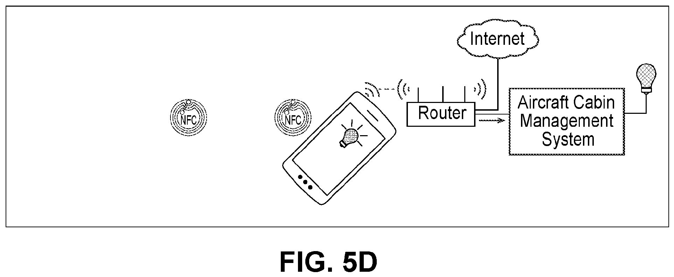

As Figure 5D shows, the smart device displays the input and display screen automatically upon the passenger moving the smart device into proximity with the second NFC tag.

The Figure 4A, 4B input displays are non-limiting; other control screens might control for example, cabin audio content/level/muting, cabin displays, cabin cameras, cabin window shades (opaque or transparent), cabin temperature, cabin media, or other cabin functions. Still other screens might display status of cabin lavatories (occupied or free), cabin chargers, or other cabin functions.

In one embodiment, different passengers on board the aircraft can be given access to different NFC tags. For example, all passengers in the passenger cabin may use the same WiFi network, so each passenger will be given access to the same first NFC tag. But in one embodiment, different passengers will be given access to different NFC tags enabling different input and display screens, in association with the passenger's location within the cabin and/or their authorization/privilege level.

For example, in one embodiment, a passenger seated in seat number 1 may control lights and air for seat number 1, whereas a passenger seated in seat number 2 may control lights and air for seat number 2. In this case, the first NFC tag and a second NFC tag encoded with an identifier corresponding to seat number 1 may be positioned near seat number 1, and the first NFC tag and a second NFC tag encoded with an identifier corresponding to seat number 2 may be positioned near seat number 2. Therefore, when the seat number 1 passenger performs the operation shown in Figure 5C, that passenger's smart device displays an interface corresponding to seat number 1 as shown in Figures 4A, 4B. In contrast, when the seat number 2 passenger performs the operation shown in Figure 5C, that passenger's smart device displays an alternative interface corresponding to seat number 2 instead of the seat number 1 interface shown in Figures 4A, 4B. In this way, the passenger in seat number 1 can control the lights, air etc. for seat number 1, and the passenger in seat number 2 can control the lights, air, etc. for seat number 2.

In some examples, not all passengers are given access to control of the ceiling lights, cabin audio, cabin temperature or other aspects of the cabin management system that affect the entire cabin. For example, it may be desirable to give children access to controls only for their own seat, and not let them play with other controls that affect the entire cabin. Another example would be of a VIP, who would have control privileges over all cabin functions. In such embodiments, the second NFC tag may be encoded with a "low privilege" vs. "high privilege" interface page, and children or non-VIPs may be given access only to the "low privilege" NFC tag whereas VIPs are given access to the "high privilege" NFC tag.

Example advantageous results are:
1) Connected PEDs without the need of a passenger to search in his/her phone for the correct SSID among available networks nor entering its related password;
2) PED's with their browsers open, directly on the page that controls cabin devices.

All patents and publications cited herein are incorporated by reference.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A method for connecting a smart device with a cabin management system of an aircraft comprising:
moving the smart device into proximity with an NFC tag,
querying the NFC tag with the smart device,
receiving data from the NFC tag in response to the querying, and
using the received data to connect to or access a cabin management system user interface.

2. The method of claim 1 wherein the cabin management system user interface enables the smart device to display status of and/or control at least one of cabin audio, cabin displays, cabin cameras, cabin lavatories, cabin chargers, cabin window shades, cabin temperature, cabin lights, and cabin media.

3. The method of claim 1 or 2 wherein the received data comprises a URL and the using comprises using the received URL to access a cabin management web page.

4. The method of one of the preceding claims further including:
moving the smart device into proximity with another NFC tag,
querying the another NFC tag with the smart device,
receiving further data from the another NFC tag in response to the querying, and
using the further data to display a cabin management input display.

5. The method of one of the preceding claims wherein using comprises using the received data to establish a wireless network connection.

6. The method of one of the preceding claims wherein the received data comprises a password, and the using comprises using the received password to connect to an access point.

7. The method of claim 1 wherein the NFC tag comprises a passive NFC tag; and/or
wherein the NFC tag specifies data associated with cabin control for a particular seat in the cabin.

8. A system for connecting a smart device with a cabin management system of an aircraft comprising:
at least one NFC tag the smart device can be moved into proximity with, and the smart device can query to receive data from; and
cabin management equipment that is accessible based on the data a smart device receives from the NFC tag.

9. The system of claim 8 wherein the cabin management equipment is configured to enable the smart device to display status of and/or control at least one of cabin audio, cabin displays, cabin cameras, cabin lavatories, cabin chargers, cabin window shades, cabin temperature, cabin lights, and cabin media.

10. The system of claim 8 or 9 wherein the received data comprises a URL and the cabin management equipment uses the received URL to provide access to a cabin management web page.

11. The system of one of claims 8 to 10 further including:
another NFC tag providing further data identifying a cabin management input display.

12. The system of one of claims 8 to 11 wherein the cabin management equipment comprises an access point that uses the received data to establish a wireless network connection with the smart device;
wherein the received data may comprise a password, and the access point may use the password to establish a network connection with the smart device.

13. The system of one of claims 8 or 12 wherein the NFC tag comprises a passive NFC tag; and/or wherein the NFC tag is configured to specify data associated with cabin control for a particular seat in the cabin.

14. The system of one of claims 8 to 13, the at least one NFC tag comprising:
a first NFC tag the smart device can be moved into proximity with, and the smart device can query to receive first data from;
a second NFC tag the smart device can be moved into proximity with, and the smart device can query to receive second data from; wherein
the cabin management equipment is accessible based on the first and second data a smart device receives from the first and second NFC tags.

15. The system of claim 14 wherein the cabin management equipment is configured to establish a wireless connection in response to the first data, and to provide a user interface screen in response to the second data; and/or
wherein the cabin management equipment is configured to provide different seat-specific user interface screens in response to different second data.
